# EUROPÄISCHE PATENTSCHRIFT

(11) **EP 3 970 497 B1**
(45) Veröffentlichungstag und Bekanntmachung des Hinweises auf die Patenterteilung: **28.05.2025**
(21) Anmeldenummer: 20197402.9
(22) Anmeldetag: 22.09.2020
(51) Int. Cl.: A21B 5/02, A21B 3/02

(54) **BACKVORRICHTUNG MIT BEWEGLICHEM SICHERHEITSSCHILD**
BAKING DEVICE WITH MOVABLE PROTECTION SHIELD
DISPOSITIF DE CUISSON AVEC ÉCRAN DE PROTECTION MOBILE

(43) Veröffentlichungstag der Anmeldung: 23.03.2022
(73) Patentinhaber: Bühler Food Equipment GmbH, 2100 Leobendorf (AT)
(72) Erfinder: Bunzl, Robert, 2130 Mistelbach (AT); Stilling, Gottfried, 1210 Wien (AT); Dlabka, Steffen, 3441 Freundorf (AT)
(74) Vertreter: Puchberger & Partner Patentanwälte

(56) Entgegenhaltungen:
- DE-A1- 3 217 502
- DE-A1- 4 415 753
- US-A- 2 786 430

## Beschreibung

Die Erfindung betrifft eine Backvorrichtung, einen Nachrüstsatz sowie ein Verfahren gemäß den Oberbegriffen unabhängigen Patentansprüche.

Backvorrichtungen zur Herstellung von gebackenen, bevorzugt essbaren, Waffelformkörpern, insbesondere zur Herstellung von aus einer zuckerhaltigen Backmasse gebackenen Waffelfladen sind in unterschiedlichen Ausführungen bekannt. Insbesondere bei Backvorrichtungen zur Herstellung von Waffelfladen, die in weiterer Folge zu Waffeltüten gerollt werden, müssen Servicehandlungen durchgeführt werden, bei denen die Backvorrichtung nicht vollständig angehalten bzw. zum Stillstand gebracht werden kann.

Hierzu umfassen gattungsgemäße Backvorrichtungen eine öffenbare Servicetüre, durch die der Servicebereich von außen zugänglich ist. Wird nun eine Servicetätigkeit an der in Betrieb befindlichen, bewegten Maschine vorgenommen, so besteht ein gewisses Risiko, dass ein Objekt, insbesondere ein Körperteil einer Bedienperson an einer bewegten Komponente hängenbleibt und in die Maschine eingezogen wird. Besonders gefährlich ist hierbei der Arbeitsbereich der geöffneten, heißen Backzangen, die kurz nach dem Servicebereich geschlossen werden.

Zur Verbesserung der Sicherheit weisen herkömmliche Backvorrichtungen einen Fußschalter auf, der von der Bedienperson betätigt werden muss, solange in oder an der bewegten Maschine gearbeitet wird. Geschieht ein unvorhergesehenes Ereignis, so kann die Maschine durch Lösen des Fußschalters gestoppt werden. In der Praxis hat sich jedoch herausgestellt, dass es trotz der Verwendung derartiger Fußschalter zu einem ungewollten Einziehen von Objekten und auch zu Verletzungen kommt.

Herkömmliche Backvorrichtungen sind unter anderem aus der DE 32 17 502 A1, DE 44 15 753 A1 und der US 2,786,430 A bekannt.

Aufgabe der Erfindung ist es nun, eine Backvorrichtung zu schaffen, die eine verbesserte Sicherheit aufweist.

Die Aufgabe wird insbesondere durch die Merkmale der unabhängigen Patentansprüche gelöst.

Die Erfindung betrifft insbesondere eine Backvorrichtung, zur Herstellung von gebackenen, bevorzugt essbaren, Waffelformkörpern, gegebenenfalls zur Herstellung von, aus einer zuckerhaltigen Backmasse gebackenen, Waffelfladen, umfassend ein Gehäuse, in dem ein Endlosförderer und mehrere öffenbare und schließbare Backformen angeordnet sind, die entlang des Endlosförderers nacheinander:
- einen Auftragsbereich mit einer Teigauftragsvorrichtung zum Auftragen einer Backmasse auf die geöffneten Backformen,
- einen Schließbereich zum Schließen der Backformen,
- einen beheizten Backraum zum Backen der in die Backformen eingebrachten Backmasse,
- einen Öffenbereich zum Öffnen der Backformen,
- einen Entnahmebereich mit einer Entnahmevorrichtung zur Entnahme der aus der Backmasse gebackenen Waffelformkörper aus den geöffneten Backformen,
- und dann wieder den Auftragsbereich, durchlaufen.

Im Gehäuse ist eine öffenbare und schließbare Servicetüre vorgesehen, durch die, in einer ersten Servicestellung, ein zwischen dem Entnahmebereich und dem Schließbereich angeordneter Servicebereich von außen zugänglich ist. Ein Not-Aus-Schalter ist vorgesehen, bei dessen Betätigung der Endlosförderer und die Backformen nach einem gewissen Anhalteweg anhalten.

Erfindungsgemäß ist ein quer zur Bewegungsrichtung der Backformen verlaufendes Sicherheitsschild vorgesehen, das in der ersten Servicestellung den Servicebereich vom Schließbereich abtrennt.

Erfindungsgemäß ist vorgesehen, dass das Sicherheitsschild in Bewegungsrichtung beweglich angeordnet ist.

Erfindungsgemäß ist vorgesehen, dass das Sicherheitsschild derart mit dem Not-Aus-Schalter verbunden ist, dass der Not-Aus-Schalter betätigt wird, wenn das Sicherheitsschild von der ersten Servicestellung Richtung oder in den Schließbereich bewegt wird.

Gegebenenfalls ist vorgesehen, dass das Sicherheitsschild in der ersten Servicestellung derart angeordnet ist, dass der im Bereich der Backformen entlang der Bewegungsrichtung gemessene Abstand des Sicherheitsschildes vom Ende des Schließbereichs größer ist als der Anhalteweg, wobei der Anhalteweg insbesondere jene Strecke ist, nach der die Backformen bei Betätigung des Not-Aus-Schalters anhalten, wenn sie mit bestimmungsgemäßer Produktionsgeschwindigkeit bewegt werden.

Gegebenenfalls ist vorgesehen, dass das Sicherheitsschild derart ausgebildet ist, dass dessen Länge veränderbar ist. Gegebenenfalls ist vorgesehen, dass das Sicherheitsschild teleskopartig zusammenschiebbar und auseinanderziehbar ausgebildet ist.

Gegebenenfalls ist vorgesehen, dass im Innenraum des Gehäuses eine Leitschiene vorgesehen ist, die derart verläuft, dass das Sicherheitsschild bei einer Bewegung in Bewegungsrichtung die Länge verändert um eine Kollision mit anderen Komponenten der Backvorrichtung zu vermeiden.

Gegebenenfalls ist vorgesehen, dass an der Leitschiene ein Ende des Sicherheitsschilds geführt gelagert ist.

Gegebenenfalls ist vorgesehen, dass im Schließbereich eine Kulisse zum Schließen der Backformen vorgesehen ist, und dass die Leitschiene dem Verlauf der Kulisse vorgelagert ist und insbesondere im Wesentlichen parallel zur Kulisse verläuft.

Gegebenenfalls ist vorgesehen, dass die Backformen als Backzangen ausgebildet sind, die jeweils zwei scharnierartig miteinander verbundene Backplatten umfassen.

Gegebenenfalls ist vorgesehen, dass sich das Sicherheitsschild in der ersten Servicestellung jeweils zwischen die beiden Backplatten einer geöffneten Backform, insbesondere einer aufgeklappten Backzange, erstreckt.

Gegebenenfalls ist vorgesehen, dass ein Sicherheitstaster vorgesehen ist, der insbesondere als Fußschalter ausgebildet ist.

Gegebenenfalls ist vorgesehen, dass die Betätigung des Sicherheitstasters eine Betätigung des Not-Aus-Schalters verhindert, selbst wenn das Sicherheitsschild von der ersten Servicestellung Richtung oder in den Schließbereich und dadurch in eine zweite Servicestellung bewegt wird oder ist.

Gegebenenfalls ist vorgesehen, dass die Servicetüre und das Sicherheitsschild in der zweiten Servicestellung derart angeordnet sind, dass der Teigauftragsbereich und die Teigauftragsvorrichtung von außen zugänglich sind.

Gegebenenfalls ist vorgesehen, dass das Sicherheitsschild schwenkbar am Rand der durch Öffnen der Servicetüre freigegebenen Öffnung angebracht ist.

Gegebenenfalls ist vorgesehen, dass die Servicetüre als Schiebetüre ausgebildet ist.

Gegebenenfalls ist vorgesehen, dass die Servicetüre scharnierartig im Bereich des freien Endes der Servicetüre angebracht ist.

Ebenso betrifft die Erfindung einen Nachrüstsatz zur Bildung einer erfindungsgemäßen Backvorrichtung umfassend das Sicherheitsschild, die Leitschiene und gegebenenfalls die Servicetüre.

Weiterhin betrifft die Erfindung ein Verfahren zum Betrieb einer erfindungsgemäßen Backvorrichtung,
- wobei die Backformen entlang des Endlosförderers bewegt werden,
- wobei sich die Backvorrichtung in der ersten Servicestellung befindet, in der die Servicetüre geöffnet ist, um den Servicebereich zugänglich zu machen, und in der das Sicherheitsschild den Servicebereich vom Schließbereich abtrennt,
- wobei, wenn sich ein Gegenstand im Servicebereich an einem bewegten Teil verfängt, der Gegenstand das Sicherheitsschild Richtung Schließbereich bewegt und dadurch den Not-Aus-Schalter betätigt,
- wobei der Not-Aus-Schalter den Endlosförderer bzw. die Backform in einem gewissen Anhalteweg anhält, bevor der Gegenstand in der geschlossenen Backform eingeklemmt wird.

Gegenfalls betrifft die Erfindung ein Verfahren zum Betrieb der erfindungsgemäßen Backvorrichtung,
- wobei sich die Backvorrichtung in der zweiten Servicestellung befindet, in der die Servicetüre geöffnet ist, um den Servicebereich zugänglich zu machen, und in der das Sicherheitsschild so weit Richtung Schließbereich bewegt ist, dass der Auftragsbereich und insbesondere die Teigauftragsvorrichtung von außen zugänglich ist,
- wobei vor oder bei der Bewegung des Sicherheitsschildes Richtung oder in den Schließbereich ein Sicherheitstaster betätigt wird, um zu verhindern, dass der Not-Aus-Schalter betätigt wird.

Zur Verbesserung der Sicherheit ist ein Sicherheitsschild vorgesehen, das in synergetischer Weise mehrere Vorteile bewirkt.

Das Sicherheitsschild ist eine physische Barriere, die den Servicebereich vom Schließbereich abtrennt, womit verhindert wird, dass ein Hantieren im Schließbereich erfolgt. Hierbei kann das Sicherheitsschild in einen Bereich ragen, in dem der Schließvorgang der Backformen bereits begonnen hat. Zudem ist das Sicherheitsschild auch eine optisch gut erkennbare Abtrennung, die dem Benutzer anzeigt, bis wohin sich der Servicebereich bzw. der Sicherheitsbereich erstreckt. Darüber hinaus ist das Sicherheitsschild mit einem Not-Aus-Schalter verbunden, der die Backvorrichtung, insbesondere den Endlosförderer und die Backformen, bei Betätigung anhält. Beispielsweise ist ein Sensor oder ein Schalter vorgesehen, der eine Bewegung des Sicherheitsschilds detektiert. In weiterer Folge kann der Sensor oder Schalter ein Signal an die Maschinensteuerung übertragen, das den Antrieb des Endlosförderers deaktiviert. In diesem Fall wirkt der Sensor oder der Schalter als Not-Aus-Schalter.

In der Praxis hat sich herausgestellt, dass die Masse des Endlosförderers und/oder der daran angebrachten oder geführten Backformen so groß ist, dass ein abruptes Anhalten nicht möglich ist. Die Backformen bewegen sich darum nach betätigen des Not-Aus-Schalters um einen gewissen Anhalteweg weiter. Dieser Anhalteweg ist von mehreren Parametern abhängig. In der Praxis spielt jedoch hauptsächlich die Bewegungsgeschwindigkeit der Backformen eine maßgebliche Rolle.

Um nun zu verhindern, dass ein Objekt in einer sich schließenden Backzange eingeklemmt wird, obwohl der Not-Aus-Schalter bereits betätigt wurde, muss der Anhalteweg berücksichtigt werden. So wird das Sicherheitsschild in der ersten Servicestellung bevorzugt derart angeordnet, dass dessen Abstand zum Ende des Schließbereichs größer ist, als der Anhalteweg. Das Ende des Schließbereichs ist insbesondere jener Bereich, in dem die Backformen soweit geschlossen sind, dass ein Objekt, beispielsweise die Hand des Benutzers, eingeklemmt sein könnte. Gegebenenfalls ist das Ende des Schließbereichs auch jener Bereich, in dem die Backformen gerade geschlossen sind. Insbesondere ist der Abstand bis zum Ende des Schließbereichs um über 10%, bevorzugt um über 20% größer, als der Anhalteweg.

Abstand bedeutet insbesondere die Distanz zwischen Sicherheitsschild und Ende des Schließbereichs der Backzangen der Backmaschine. Der Abstand wird insbesondere im Bereich der Backformen entlang deren Bewegungsrichtung gemessen. Der Abstand wird bevorzugt derart bemessen, dass er ausreichend groß ist, wenn die Backformen mit normaler, bestimmungsgemäßer Produktionsgeschwindigkeit bewegt werden. Eine häufige Servicetätigkeit, die an gattungsgemäßen Backvorrichtungen durchgeführt wird, ist das Anfahren der Backvorrichtung. Bei diesem Anfahren der Maschine tritt der Effekt auf, dass die Waffelformkörper im Entnahmebereich nicht oder nicht vollständig entnommen werden. Die nach dem Entnahmebereich anhaftenden Waffelformkörper müssen daher beim Anfahren oft händisch von den Backformen entfernt werden. Diese Tätigkeit geschieht in einem Betriebsmodus der Backvorrichtung, in dem die Backformen mit normaler Betriebsgeschwindigkeit bewegt werden.

Der Anhalteweg kann abhängig von der Maschinengeschwindigkeit zwischen 20mm und 500mm liegen. Ein üblicher Anhalteweg bei dieser Geschwindigkeit beträgt beispielsweise 200mm bis 500mm, womit auch der Abstand zwischen dem Sicherheitsschild und dem Ende des Schließbereichs diesem Anhalteweg angepasst sein muss.

Bei anderen Tätigkeiten, beispielsweise bei der Wartung der Teigauftragsvorrichtung, kann die Geschwindigkeit der Backformen reduziert werden. In diesem Fall ist folglich auch der Anhalteweg kürzer.

Die erste Servicestellung ist insbesondere dazu gedacht, die Backformen zu warten bzw. zu reinigen und insbesondere beim Hochfahren anhaftende Rückstände zu entfernen. Verhängt sich ein Objekt wie beispielsweise eine Spachtel an einer geöffneten Backzange, so wird dieses Objekt mit der Backzange mitbefördert. In weiterer Folge wird durch das Objekt das Sicherheitsschild Richtung oder in den Schließbereich mitgezogen. Durch die Bewegung des Sicherheitsschilds wird der Not-Aus-Schalter betätigt und die Backzangen werden innerhalb des Anhaltewegs angehalten. Da der Abstand zwischen dem Sicherheitsschild und dem Ende des Schließbereichs in der ersten Servicestellung ausreichend groß bemessen ist, wird die betreffende Backform angehalten, bevor das Objekt insbesondere in den Backformen eingeklemmt wird.

Bevorzugt soll verhindert werden, dass das Sicherheitsschild bei diesem Vorgang mit anderen Komponenten der Backvorrichtung kollidiert und diese dadurch gegebenenfalls beschädigt. Dies wird insbesondere dadurch erreicht, dass das Sicherheitsschild in seiner Länge veränderbar ist. So kann das Sicherheitsschild beispielsweise teleskopartig zusammenschiebbar und auseinanderziehbar sein. Alternativ kann das Sicherheitsschild gegebenenfalls faltbar oder flexibel ausgebildet sein. Das Sicherheitsschild kann beispielsweise aus transparentem, durchsichtigen Material oder Kunststoff oder Metall ausgebildet sein.

Bevorzugt umfasst die Backmaschine eine Leitschiene, die verhindert, dass das Sicherheitsschild bei dessen Bewegung mit anderen Komponenten kollidiert. Insbesondere umfasst die Backvorrichtung eine Leitschiene, an der das Sicherheitsschild an einem Ende geführt gelagert ist. Die Leitschiene verläuft bevorzugt innerhalb des Gehäuses der Backvorrichtung und ist derart ausgebildet, dass eine Kollision des Sicherheitsschilds mit anderen Komponenten verhindert wird. Insbesondere werden die Backformen durch eine Kulisse geschlossen. Die Kulisse ist bevorzugt durch eine oder mehrere gebogene Stangen gebildet, an denen Führungsglieder der Backformen angebracht sind. Die Kulisse erstreckt sich aus technischen Gründen meist quer durch den Schließbereich. Um eine Kollision des Sicherheitsschilds mit der Kulisse zu verhindern, wenn das Sicherheitsschild Richtung oder in den Schließbereich gedrückt wird, ist die Leitschiene bevorzugt dem Verlauf der Kulisse vorgelagert.

Bei der Bewegung der Leitschiene Richtung Schließbereich wird ein Endbereich des Sicherheitsschilds an die Leitschiene geführt. Die Länge des Sicherheitsschilds wird dabei derart verändert, dass eine Kollision mit der Kulisse verhindert wird. Auch dadurch kann die Sicherheit der Backvorrichtung verbessert werden.

Gegebenenfalls ist vorgesehen, dass die Waffelformkörper aus einem Teig mit folgenden Inhaltsstoffen gebacken werden: Mehl, Zucker, Wasser, Öl, Lecithin und eventuell Backzusatzstoffe in geringen Mengen wie Vanillin, Salz, Natriumcarbonat, Stärke.

Gegebenenfalls ist vorgesehen, dass die Waffelformkörper zur Herstellung folgender Produkte eingesetzt werden können: Eistüten, Eisbecher, gerollte Eistüten, tiefgezogene Eisschalen und Eisbecher, Waffelröllchen etc.

Die Waffelformkörper können Backzwischenprodukte wie beispielsweise backwarme Waffelfladen sein, die gegebenenfalls in einer nachfolgenden Station zu Waffeltüten gerollt werden. Die Waffelkörper können auch fertige fladenförmige Backprodukte sein.

In weiterer Folge wird die Erfindung anhand von Figuren weiter beschrieben.
Figur 1 zeigt eine schematische Seitenansicht einiger Komponenten einer Backvorrichtung.
Figur 2 zeigt eine Detailansicht einiger Komponenten einer Backvorrichtung in einer geschlossenen Stellung.
Figur 3 zeigt eine schematische Schrägansicht von Komponenten einer Backvorrichtung in der ersten Servicestellung.
Figur 4 zeigt eine schematische Ansicht von oben.

Wenn nicht anders angegeben, so entsprechen die Bezugszeichen folgenden Komponenten:
Gehäuse 1, Endlosförderer 2, Backform 3, Auftragsbereich 4, Teigauftragsvorrichtung 5, Schließbereich 6, Backraum 7, Öffenbereich 8, Entnahmebereich 9, Entnahmevorrichtung 10, Servicetüre 11, Servicebereich 12, Bewegungsrichtung 13, Sicherheitsschild 14, Abstand 15, Leitschiene 16, Kulisse 17, Backplatte 18, Sicherheitstaster 19, Länge 20.

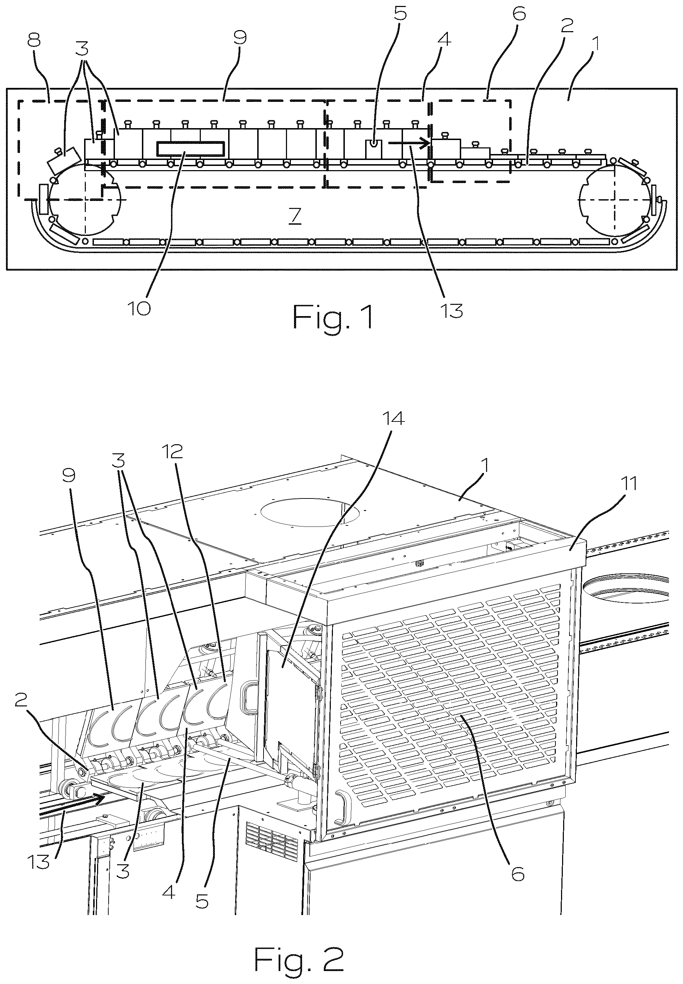

**Figur 1** zeigt eine stark vereinfachte Seitenansicht einer Backvorrichtung mit ausgeblendetem seitlichem Gehäuse, um die grundlegende Funktionsweise beschreiben zu können. In einem Gehäuse 1 ist ein Endlosförderer 2 vorgesehen. Entlang des Endlosförderers 2 sind mehrere Backformen 3 vorgesehen. Insbesondere bilden die Backformen 3 zusammen mit dem Endlosförderer 2 eine endlose Backzangenkette, die die Backformen 3 durch mehrere Bereiche befördert. Die Bewegung des Endlosförderers 2 bzw. der Backformen 3 geschieht durch einen nicht dargestellten, herkömmlichen Antrieb. Die Backformen 3 werden entlang einer Bewegungsrichtung 13 befördert. In einem ersten Schritt werden die Backformen 3 durch einen Auftragsbereich 4 befördert. In dem Auftragsbereich 4 ist eine Teigauftragsvorrichtung 5 vorgesehen, durch die ein Teig bzw. eine Backmasse auf die Backformen 3 aufgetragen werden kann. Die Backformen 3 sind im Auftragsbereich 4 hierzu geöffnet. Anschließend werden die Backformen 3 durch einen Schließbereich 6 befördert, in dem die Backformen 3 geschlossen werden. Das Schließen der Backformen 3 geschieht beispielsweise über eine nicht dargestellte Kulisse 17 oder über andere herkömmliche Mittel. Am Ende des Schließbereichs 6 sind die Backformen 3 jeweils ganz oder nahezu geschlossen. Anschließend werden die geschlossenen Backformen 3 durch einen beheizten Backraum 7 befördert. In diesem Backraum 7 wird der in den Backformen 3 vorgesehene Teig bzw. die Backmasse ausgebacken. Nach dem Transport durch den Backraum 7 werden die Backformen 3 durch einen Öffenbereich 8 befördert und dort geöffnet. Anschließend werden die Backformen 3 in ihrer offenen Stellung durch einen Entnahmebereich 9 befördert. In diesem Entnahmebereich 9 ist eine Entnahmevorrichtung 10 vorgesehen, die die gebackenen Waffelformkörper aus den Backformen 3 entnimmt und für eine Nachbearbeitung oder eine weitere Bearbeitung beispielsweise einer anderen Station zuführt. Die in Figur 1 dargestellten Komponenten können insbesondere herkömmliche Komponenten einer gattungsgemäßen Backvorrichtung zur Herstellung von Waffelprodukten sein.

Bevorzugt ist die Backvorrichtung zur Herstellung von gebackenen Produkten aus einem zuckerhaltigen Teig eingerichtet. Die Waffelformkörper weisen in ihrem heißen, backwarmen Zustand eine plastisch verformbare Konsistenz auf. Durch Abkühlen der Waffelformkörper erstarrt der Zuckeranteil und die Waffelformkörper erhalten ihre typische knusprig-spröde Konsistenz. Beispielsweise können die Waffelformkörper in einer Tütenrollvorrichtung tütenförmig gerollt und abgekühlt werden, sodass gerollte, knusprige Waffeltüten gebildet werden.

**Figur 2** zeigt Komponenten einer Backvorrichtung in einer schematischen Schrägansicht. Das Gehäuse 1 weist eine Servicetüre 11 auf, die in der Darstellung der Figur 2 geschlossen ist. Die Servicetüre 11 ist in dieser Ausführungsform gitterförmig ausgebildet. Grundsätzlich kann diese Türe jedoch auch geschlossen oder mit einem Sichtfenster ausgebildet sein. Zur Verbesserung der Ersichtlichkeit maßgeblicher Komponenten sind Teile des Gehäuses 1 nicht dargestellt. Die Servicetüre 11 verschließt in dieser Stellung die Zugänglichkeit eines Servicebereichs 12, der hinter dieser Servicetüre 11 angeordnet ist. Die Backvorrichtung umfasst mehrere Backformen 3, die entlang einer Bewegungsrichtung 13 befördert werden. Im Auftragsbereich 4 ist eine Teigauftragsvorrichtung 5 vorgesehen. Diese ist dazu geeignet und/oder eingerichtet, eine Backmasse auf die geöffneten Backformen 3 aufzutragen. Die Backvorrichtung umfasst ein Sicherheitsschild 14. Dieses entfaltet seine Wirkung insbesondere dann, wenn die Servicetüre 11 geöffnet ist.

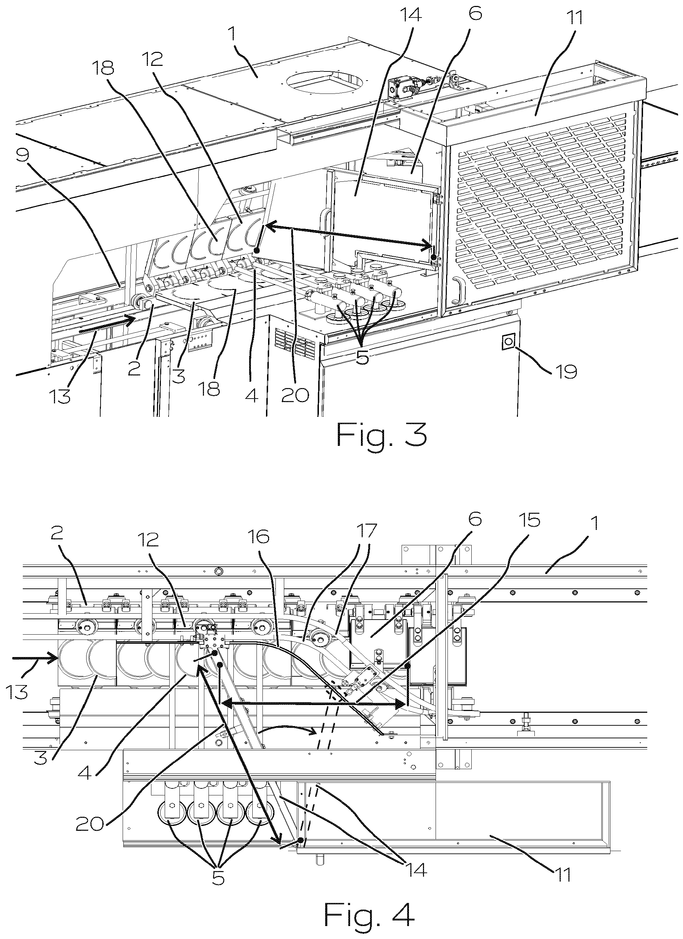

**Figur 3** zeigt dieselben Komponenten wie Figur 2, jedoch befindet sich die Backvorrichtung in der ersten Servicestellung, insbesondere in geöffneter Position, sodass zumindest ein Teil des Innenraums für den Bediener zugänglich ist. In der ersten Servicestellung ist die Servicetüre 11 soweit geöffnet, dass ein Servicebereich 12 zugänglich ist. In diesem Servicebereich 12 sind, in dieser Ausführungsform, die Backformen 3 geöffnet. Der Servicebereich 12 erstreckt sich insbesondere von dem Entnahmebereich 9, in dem die Waffelformkörper entnommen werden, bis zum Sicherheitsschild 14. In dem Servicebereich 12 der ersten Servicestellung können beispielsweise Teigreste von den Backformen 3 entfernt werden, die - entgegen der Funktionsweise der Backvorrichtung - nicht im Entnahmebereich 9 entnommen wurden.

In der Praxis kann diese Fehlfunktion beispielsweise beim Hochfahren der Backvorrichtung auftreten. Eine Bedienperson kann in diesem Fall die Servicetüre 11 öffnen und mit einem Werkzeug, beispielsweise mit einer Spachtel, die ungewollt an den Backformen 3 anhaftenden Teigrückstände manuell entfernen. Das Sicherheitsschild 14 dient der Verbesserung der Sicherheit der Backvorrichtung. Das Sicherheitsschild 14 trennt den Servicebereich 12 vom Schließbereich 6 ab, insbesondere um zu verhindern, dass Objekte in den sich schließenden Backformen 3 eingeklemmt werden. Dies dient einerseits der Arbeitssicherheit für Bedienpersonen. Andererseits hilft dies auch, Beschädigungen der Backvorrichtung zu vermeiden. Das Sicherheitsschild 14 ist beweglich angeordnet. Insbesondere kann das Sicherheitsschild 14 in Richtung Schließbereich 6 bewegt werden.

**Figur 4** zeigt die Ausführungsform der Figur 3, jedoch von oben betrachtet, wobei Teile des Gehäuses 1 ausgeblendet sind. Die dargestellten Komponenten entsprechen den Komponenten aus Figur 3.

Die Servicetüre 11 ist geöffnet und macht einen Servicebereich 12 von außen zugänglich. Dieser Servicebereich 12 erstreckt sich in der ersten Servicestellung von dem Sicherheitsschild 14 bis zum Entnahmebereich 9.

Das Sicherheitsschild 14 ist beweglich angebracht. Insbesondere kann sich das Sicherheitsschild 14 von der dargestellten Lage der ersten Servicestellung in Richtung Schließbereich 6 bzw. in den Schließbereich 6 bewegen. Eine zweite Stellung des Sicherheitsschildes 14 ist strichliert dargestellt. Wird das Sicherheitsschild 14 in Richtung Schließbereich 6 bewegt, so wird ein Not-Aus-Schalter betätigt. Dieser Not-Aus-Schalter hält den Endlosförderer 2 und/oder die Backformen 3 an. Jedoch können die Backformen 3 nicht abrupt angehalten werden, sondern die Backformen 3 stoppen erst nach einem gewissen Anhalteweg. Insbesondere aus diesem Grund weist das Sicherheitsschild 14 einen Abstand 15 zum Endbereich des Schließbereichs 6 auf. Dieser Abstand 15 wird insbesondere im Bereich der Backformen 3 und entlang der Bewegungsrichtung 13 der Backformen 3 gemessen. Der Abstand 15 ist so bemessen, dass er größer ist als der Anhalteweg. Dadurch kann verhindert werden, dass ein Objekt in den Backformen 3 eingeklemmt wird, obwohl der Notausschalter betätigt wurde. Beispielsweise kann ein Sensor oder ein Schalter vorgesehen sein, der eine Bewegung des Sicherheitsschildes 14 detektiert.

Die Backvorrichtung umfasst in dieser Ausführungsform eine Leitschiene 16. Diese Leitschiene 16 soll verhindern, dass das Sicherheitsschild 14 mit weiteren Komponenten der Backvorrichtung kollidiert, wenn es Richtung Schließbereich 6 bewegt wird. Insbesondere ist das Sicherheitsschild 14 in seiner Länge 20 veränderbar ausgebildet. So kann das Sicherheitsschild 14 in allen Ausführungsformen mehrteilig ausgestaltet sein. In der vorliegenden Ausführungsform ist das Sicherheitsschild 14 teleskopartig zusammenschiebbar ausgebildet. Bei einer Bewegung des Sicherheitsschildes 14 wird dieses durch die Leitschiene 16 zumindest abschnittsweise geleitet. Insbesondere wird in der vorliegenden Ausführungsform die Länge 20 des Sicherheitsschildes 14 durch die Leitschiene 16 bei einer Bewegung in Bewegungsrichtung 13 verkürzt. Dadurch kann eine Kollision mit der Kulisse 17 der Backvorrichtung vermieden werden. Die Kulisse 17 dient dem Schließen der Backformen 3 im Schließbereich 6. In der vorliegenden Ausführungsform ist die Leitschiene 16 dem Verlauf der Kulisse 17 folgend ausgebildet, wobei die Leitschiene 16 der Kulisse 17 vorgelagert ist, um eine Kollision des Sicherheitsschildes 14 mit der Kulisse 17 zu verhindern. Bevorzugt ist ein Endbereich des Sicherheitsschildes 14 an der Leitschiene 16 geführt angebracht. Bei dieser Führung kann beispielsweise ein Schalter oder ein Sensor vorgesehen sein, der die Bewegung des Sicherheitsschildes 14 detektiert, um den Not-Aus-Schalter zu betätigen.

Die strichliert dargestellte Stellung des Sicherheitsschildes 14 entspricht der zweiten Servicestellung. In dieser zweiten Servicestellung ist es möglich, die Teigauftragsvorrichtung 5 zu warten und insbesondere zu entfernen. Um zu verhindern, dass die Maschine gestoppt wird, wenn das Serviceschild 14 in Richtung Schließbereich 6 bewegt ist, kann ein Sicherheitstaster 19 vorgesehen sein. Der Sicherheitstaster 19 kann beispielsweise als Fußschalter ausgebildet sein. Betätigt die Bedienperson diesen Sicherheitstaster 19, so wird die Backvorrichtung nicht stillgesetzt, wenn das Sicherheitsschild 14 von der ersten Servicestellung in Richtung Schließbereich 6 bewegt wird.

In der Praxis werden in der zweiten Servicestellung Wartungsarbeiten an der Teigauftragsvorrichtung 5 vorgenommen. Bei diesen Wartungsarbeiten kann die Geschwindigkeit der Backformen 3 herabgesetzt werden. Dadurch wird das Unfallrisiko verringert. Zudem erfolgt die Wartung an der Teigauftragsvorrichtung 5 in einem außenliegenden Bereich der Backvorrichtung, womit das Unfallrisiko weiter verringert ist. Im Gegensatz dazu erfolgt eine Wartung der Backplatten verhältnismäßig tief in der Maschine, womit ein höheres Unfallrisiko besteht.

Die Verbesserung der Sicherheit einer gattungsgemäßen Backvorrichtung kann durch Bereitstellen und Einbauen eines Nachrüstsatzes erfolgen. Zur Bildung einer Backvorrichtung mit verbesserter Sicherheit können das Sicherheitsschild 14 und die Leitschiene 16 nachträglich mit einer bestehenden Backvorrichtung verbunden werden. Gegebenenfalls kann auch die Servicetüre 11 ein Teil des Nachrüstsatzes sein. Bevorzugt kann auch die Verbindung des Sicherheitsschilds mit dem Not-Aus-Schalter ein Teil des Nachrüstsatzes sein.

## Patentansprüche

1. **Backvorrichtung,** zur Herstellung von gebackenen, bevorzugt essbaren, Waffelformkörpern, insbesondere zur Herstellung von, aus einer zuckerhaltigen Backmasse gebackenen, Waffelfladen, umfassend ein Gehäuse (1), in dem ein Endlosförderer (2) und mehrere öffenbare und schließbare Backformen (3) angeordnet sind, die entlang des Endlosförderers (2) nacheinander:
- einen Auftragsbereich (4) mit einer Teigauftragsvorrichtung (5) zum Auftragen einer Backmasse auf die geöffneten Backformen (3),
- einen Schließbereich (6) zum Schließen der Backformen (3),
- einen beheizten Backraum (7) zum Backen der in die Backformen (3) eingebrachten Backmasse,
- einen Öffenbereich (8) zum Öffnen der Backformen (3),
- einen Entnahmebereich (9) mit einer Entnahmevorrichtung (10) zur Entnahme der aus der Backmasse gebackenen Waffelformkörper aus den geöffneten Backformen (3),
- und dann wieder den Auftragsbereich (4), durchlaufen,
- wobei im Gehäuse (1) eine öffenbare und schließbare Servicetüre (11) vorgesehen ist, durch die, in einer ersten Servicestellung, ein zwischen dem Entnahmebereich (9) und dem Schließbereich (6) angeordneter Servicebereich (12) von außen zugänglich ist,
- und wobei ein Not-Aus-Schalter vorgesehen ist, bei dessen Betätigung der Endlosförderer (2) und die Backformen (3) nach einem gewissen Anhalteweg anhalten,
**dadurch gekennzeichnet,**
- **dass** ein quer zur Bewegungsrichtung (13) der Backformen (3) verlaufendes Sicherheitsschild (14) vorgesehen ist, das in der ersten Servicestellung den Servicebereich (12) vom Schließbereich (6) abtrennt,
- **dass** das Sicherheitsschild (14) in Bewegungsrichtung (13) beweglich angeordnet ist,
- und **dass** das Sicherheitsschild (14) derart mit dem Not-Aus-Schalter verbunden ist, dass der Not-Aus-Schalter betätigt wird, wenn das Sicherheitsschild (14) von der ersten Servicestellung Richtung oder in den Schließbereich (6) bewegt wird.

2. Backvorrichtung nach Anspruch 1, **dadurch gekennzeichnet, dass** das Sicherheitsschild (14) in der ersten Servicestellung derart angeordnet ist, dass der im Bereich der Backformen (3) entlang der Bewegungsrichtung (13) gemessene Abstand (15) des Sicherheitsschildes (14) vom Ende des Schließbereichs (6) größer ist als der Anhalteweg, wobei der Anhalteweg insbesondere jene Strecke ist, nach der die Backformen (3) bei Betätigung des Not-Aus-Schalters anhalten, wenn sie mit bestimmungsgemäßer Produktionsgeschwindigkeit bewegt werden.

3. Backvorrichtung nach Anspruch 1 oder 2, **dadurch gekennzeichnet,**
- **dass** das Sicherheitsschild (14) derart ausgebildet ist, dass dessen Länge (20) veränderbar ist,
- insbesondere dass das Sicherheitsschild (14) teleskopartig zusammenschiebbar und auseinanderziehbar ausgebildet ist.

4. Backvorrichtung nach einem der Ansprüche 1 bis 3, **dadurch gekennzeichnet,**
- **dass** im Innenraum des Gehäuses (1) eine Leitschiene (16) vorgesehen ist, die derart verläuft, dass das Sicherheitsschild (14) bei einer Bewegung in Bewegungsrichtung (13) die Länge (20) verändert um eine Kollision mit anderen Komponenten der Backvorrichtung zu vermeiden.

5. Backvorrichtung nach Anspruch 4, **dadurch gekennzeichnet, dass** an der Leitschiene (16) ein Ende des Sicherheitsschilds (14) geführt gelagert ist.

6. Backvorrichtung nach Anspruch 5 oder 6, **dadurch gekennzeichnet, dass** im Schließbereich (6) eine Kulisse (17) zum Schließen der Backformen (3) vorgesehen ist, und dass die Leitschiene (16) dem Verlauf der Kulisse (17) vorgelagert ist und insbesondere im Wesentlichen parallel zur Kulisse (17) verläuft.

7. Backvorrichtung nach einem der Ansprüche 1 bis 6, **dadurch gekennzeichnet, dass** sich das Sicherheitsschild (14) in der ersten Servicestellung jeweils zwischen die beiden Backplatten (18) einer aufgeklappten, insbesondere als Backzange ausgebildeten, Backform (3) erstreckt.

8. Backvorrichtung nach einem der Ansprüche 1 bis 7, **dadurch gekennzeichnet, dass** ein Sicherheitstaster (19) vorgesehen ist, der insbesondere als Fußschalter ausgebildet ist, und dass die Betätigung des Sicherheitstasters (19) eine Betätigung des Not-Aus-Schalters verhindert, selbst wenn das Sicherheitsschild (14) von der ersten Servicestellung Richtung oder in den Schließbereich (6) und dadurch in eine zweite Servicestellung bewegt wird.

9. Backvorrichtung nach Anspruch 8, **dadurch gekennzeichnet, dass** die Servicetüre (11) und das Sicherheitsschild (14) in der zweiten Servicestellung derart angeordnet sind, dass der Teigauftragsbereich und die Teigauftragsvorrichtung (5) von außen zugänglich sind.

10. Backvorrichtung nach einem der Ansprüche 1 bis 9, **dadurch gekennzeichnet,**
- **dass** das Sicherheitsschild (14) schwenkbar am Rand der durch Öffnen der Servicetüre (11) freigegebenen Öffnung angebracht ist,
- insbesondere dass die Servicetüre (11) als Schiebetüre ausgebildet ist und dass die Servicetüre (11) scharnierartig im Bereich des freien Endes der Servicetüre (11) angebracht ist.

11. Nachrüstsatz zur Bildung einer Backvorrichtung, zur Herstellung von gebackenen, bevorzugt essbaren, Waffelformkörpern, insbesondere zur Herstellung von, aus einer zuckerhaltigen Backmasse gebackenen, Waffelfladen,
wobei die Backvorrichtung ein Gehäuse (1) umfasst, in dem ein Endlosförderer (2) und mehrere öffenbare und schließbare Backformen (3) angeordnet sind, die entlang des Endlosförderers (2) nacheinander:
- einen Auftragsbereich (4) mit einer Teigauftragsvorrichtung (5) zum Auftragen einer Backmasse auf die geöffneten Backformen (3),
- einen Schließbereich (6) zum Schließen der Backformen (3),
- einen beheizten Backraum (7) zum Backen der in die Backformen (3) eingebrachten Backmasse,
- einen Öffenbereich (8) zum Öffnen der Backformen (3),
- einen Entnahmebereich (9) mit einer Entnahmevorrichtung (10) zur Entnahme der aus der Backmasse gebackenen Waffelformkörper aus den geöffneten Backformen (3),
- und dann wieder den Auftragsbereich (4), durchlaufen,
- wobei im Gehäuse (1) eine öffenbare und schließbare Servicetüre (11) vorgesehen ist, durch die, in einer ersten Servicestellung, ein zwischen dem Entnahmebereich (9) und dem Schließbereich (6) angeordneter Servicebereich (12) von außen zugänglich ist,
- wobei ein Not-Aus-Schalter vorgesehen ist, bei dessen Betätigung der Endlosförderer (2) und die Backformen (3) nach einem gewissen Anhalteweg anhalten,
- und wobei der Nachrüstsatz ein Sicherheitsschild (14), eine Leitschiene (16) und gegebenenfalls eine Servicetüre (11) umfasst,
**dadurch gekennzeichnet,**
- **dass** der Nachrüstsatz derart mit der Backvorrichtung verbindbar oder verbunden ist,
- **dass** das Sicherheitsschild (14) des Nachrüstsatzes quer zur Bewegungsrichtung (13) der Backformen (3) verlaufend vorgesehen ist, das in der ersten Servicestellung den Servicebereich (12) vom Schließbereich (6) abtrennt,
- **dass** das Sicherheitsschild (14) des Nachrüstsatzes in Bewegungsrichtung (13) beweglich angeordnet ist,
- **dass** das Sicherheitsschild (14) des Nachrüstsatzes derart mit dem Not-Aus-Schalter verbunden ist, dass der Not-Aus-Schalter betätigt wird, wenn das Sicherheitsschild (14) von der ersten Servicestellung Richtung oder in den Schließbereich (6) bewegt wird,
- **dass** das Sicherheitsschild (14) des Nachrüstsatzes derart ausgebildet ist, dass dessen Länge (20) veränderbar ist,
- und **dass** im Innenraum des Gehäuses (1) die Leitschiene (16) des Nachrüstsatzes vorgesehen ist, die derart verläuft, dass das Sicherheitsschild (14) des Nachrüstsatzes bei einer Bewegung in Bewegungsrichtung (13) die Länge (20) verändert um eine Kollision mit anderen Komponenten der Backvorrichtung zu vermeiden.

12. **Verfahren** zum Betrieb einer Backvorrichtung nach einem der Ansprüche 1 bis 10,
- wobei die Backformen (3) entlang des Endlosförderers (2) bewegt werden,
- wobei sich die Backvorrichtung in der ersten Servicestellung befindet, in der die Servicetüre (11) geöffnet ist, um den Servicebereich (12) zugänglich zu machen, und in der das Sicherheitsschild (14) den Servicebereich (12) vom Schließbereich (6) abtrennt,
- wobei, wenn sich ein Gegenstand im Servicebereich (12) an einem bewegten Teil verfängt, der Gegenstand das Sicherheitsschild (14) Richtung Schließbereich (6) bewegt und dadurch den Not-Aus-Schalter betätigt,
- wobei der Not-Aus-Schalter den Endlosförderer (2) bzw. die Backform (3) in einem gewissen Anhalteweg anhält, bevor der Gegenstand in der geschlossenen Backform (3) eingeklemmt wird.

13. **Verfahren** nach Anspruch 12,
- wobei sich die Backvorrichtung in der zweiten Servicestellung befindet, in der die Servicetüre (11) geöffnet ist, um den Servicebereich (12) zugänglich zu machen, und in der das Sicherheitsschild (14) so weit Richtung Schließbereich (6) bewegt ist, dass der Auftragsbereich (4) und insbesondere die Teigauftragsvorrichtung (5) von außen zugänglich ist,
- wobei vor oder bei der Bewegung des Sicherheitsschildes (14) Richtung oder in den Schließbereich (6) ein Sicherheitstaster (19) betätigt wird, um zu verhindern, dass der Not-Aus-Schalter betätigt wird.

## Claims

1. A **Baking device** for producing baked, preferably edible, moulded wafer bodies, in particular for producing wafer sheets baked from a sugar-containing baking mass, comprising a housing (1) in which an endless conveyor (2) and multiple openable and closable baking moulds (3) are arranged, which, along the endless conveyor (2), successively pass through:
- a depositing region (4) with a dough depositing device (5) for depositing a baking mass onto the opened baking moulds (3),
- a closing region (6) for closing the baking moulds (3),
- a heated baking chamber (7) for baking the baking mass placed in the baking moulds (3),
- an opening region (8) for opening the baking moulds (3),
- a removal region (9) with a removal device (10) for removing the moulded wafer bodies baked from the baking mass from the opened baking moulds (3),
- and then again through the depositing region (4),
- wherein an openable and closable service door (11) is provided in the housing (1), through which, in a first service position, a service region (12) arranged between the removal region (9) and the closing region (6) is accessible from the outside,
- and wherein an emergency stop switch is provided, which, when actuated, causes the endless conveyor (2) and the baking moulds (3) to come to a stop after a certain stopping distance,
**characterised**
- **in that** a safety shield (14) is provided, extending transversely to the direction of movement (13) of the baking moulds (3), and separating the service region (12) from the closing region (6) in the first service position,
- **in that** the safety shield (14) is arranged to be movable in the direction of movement (13),
- and **in that** the safety shield (14) is connected to the emergency stop switch in such a way that the emergency stop switch is actuated when the safety shield (14) is moved from the first service position towards or into the closing region (6).

2. The baking device according to claim 1, **characterised in that** the safety shield (14) is arranged in the first service position in such a way that the distance (15) of the safety shield (14) from the end of the closing region (6) measured in the region of the baking moulds (3) along the direction of movement (13) is greater than the stopping distance, wherein the stopping distance is, in particular, the distance after which the baking moulds (3) stop when the emergency stop switch is actuated if they are moved at the intended production speed.

3. The baking device according to claim 1 or 2, **characterised**
- **in that** the safety shield (14) is designed in such a way that its length (20) is adjustable,
- in particular in that the safety shield (14) is formed telescopically collapsible and extendable.

4. The baking device according to one of claims 1 to 3, **characterised**
- **in that** a guide rail (16) is provided in the interior space of the housing (1), which extends in such a way that the safety shield (14) changes its length (20) during a movement in the direction of movement (13) in order to avoid a collision with other components of the baking device.

5. The baking device according to claim 4, **characterised in that** one end of the safety shield (14) is mounted and guided on the guide rail (16).

6. The baking device according to claim 5 or 6, **characterised in that** a slotted link (17) for closing the baking moulds (3) is provided in the closing region (6), and **in that** the guide rail (16) is positioned upstream of the path of the slotted link (17) and, in particular, extends substantially parallel to the slotted link (17).

7. The baking device according to one of claims 1 to 6, **characterised in that** in the first service position, the safety shield (14) extends between the two respective baking plates (18) of an opened baking mould (3), in particular designed as baking tongs.

8. The baking device according to one of claims 1 to 7, **characterised in that** a safety button (19) is provided, which is designed in particular as a foot switch, and **in that** actuation of the safety button (19) prevents actuation of the emergency stop switch, even if the safety shield (14) is moved from the first service position towards or into the closing region (6) and thereby into a second service position.

9. The baking device according to claim 8, **characterised in that** the service door (11) and the safety shield (14) are arranged in the second service position such that the dough depositing region and the dough deposition device (5) are accessible from the outside.

10. The baking device according to one of claims 1 to 9, **characterised**
- **in that** the safety shield (14) is pivotably attached to the edge of the opening that is cleared by opening the service door (11),
- in particular in that the service door (11) is designed as a sliding door and in that the service door (11) is hingedly arranged in the region of the free end of the service door (11).

11. Retrofit kit for creating a baking device, for producing baked, preferably edible, moulded wafer bodies, in particular for producing wafer sheets baked from a sugar-containing baking mass,
wherein the baking device comprises a housing (1) in which an endless conveyor (2) and multiple openable and closable baking moulds (3) are arranged, which, along the endless conveyor (2), successively pass through:
- a depositing region (4) with a dough depositing device (5) for depositing a baking mass onto the opened baking moulds (3),
- a closing region (6) for closing the baking moulds (3),
- a heated baking chamber (7) for baking the baking mass placed in the baking moulds (3),
- an opening region (8) for opening the baking moulds (3),
- a removal region (9) with a removal device (10) for removing the moulded wafer bodies baked from the baking mass from the opened baking moulds (3),
- and then again through the depositing region (4),
- wherein an openable and closable service door (11) is provided in the housing (1), through which, in a first service position, a service region (12) arranged between the removal region (9) and the closing region (6) is accessible from the outside,
- wherein an emergency stop switch is provided, which, when actuated, causes the endless conveyor (2) and the baking moulds (3) to come to a stop after a certain stopping distance,
- and wherein the retrofit kit comprises a safety shield (14), a guide rail (16) and, optionally, a service door (11),
**characterised**
- **in that** the retrofit kit is connectable or connected to the baking device in such a way,
- **in that** the safety shield (14) of the retrofit kit is provided extending transversely to the direction of movement (13) of the baking moulds (3), which separates the service region (12) from the closing region (6) in the first service position,
- **in that** the safety shield (14) of the retrofit kit is arranged to be movable in the direction of movement (13),
- and **in that** the safety shield (14) of the retrofit kit is connected to the emergency stop switch in such a way that the emergency stop switch is actuated when the safety shield (14) is moved from the first service position towards or into the closing region (6),
- **in that** the safety shield (14) of the retrofit kit is designed in such a way that its length (20) is adaptable,
- and **in that** the guide rail (16) of the retrofit kit is provided in the interior space of the housing (1), which extends in such a way that the safety shield (14) of the retrofit kit changes its length (20) during a movement in the direction of movement (13) in order to avoid a collision with other components of the baking device.

12. **A method** for operating a baking device according to any one of claims 1 to 10,
- wherein the baking moulds (3) are moved along the endless conveyor (2),
- wherein the baking device is in the first service position, in which the service door (11) is open to provide access to the service region (12), and in which the safety shield (14) separates the service region (12) from the closing region (6),
- wherein, if an object in the service region (12) catches on a moving part, the object moves the safety shield (14) towards the closing region (6) and thereby actuates the emergency stop switch,
- wherein the emergency stop switch stops the endless conveyor (2) / the baking mould (3) within a certain stopping distance before the object becomes trapped in the closed baking mould (3).

13. **The method** according to claim 12,
- wherein the baking device is in the second service position, in which the service door (11) is open to provide access to the service region (12), and in which the safety shield (14) is moved so far towards the closing region (6) that the deposition region (4) and in particular the dough depositing device (5) is accessible from the outside,
- wherein a safety button (19) is actuated before or during the movement of the safety shield (14) towards or into the closing region (6) in order to prevent the emergency stop switch from being actuated.

## Revendications

1. **Dispositif de cuisson,** pour la fabrication de corps moulés gaufrés cuits, de préférence comestibles, en particulier pour la fabrication de galettes gaufrées cuites à partir d'une masse de cuisson contenant du sucre, comprenant un boîtier (1) dans lequel sont disposés un convoyeur sans fin (2) et plusieurs moules de cuisson (3) ouvrables et fermables, qui passent successivement le long du convoyeur sans fin (2) :
- une zone d'application (4) avec un dispositif d'application de pâte (5) pour appliquer une masse de cuisson sur les moules de cuisson (3) ouverts,
- une zone de fermeture (6) pour fermer les moules de cuisson (3),
- un espace de cuisson (7) chauffé pour cuire la masse de cuisson introduite dans les moules de cuisson (3),
- une zone d'ouverture (8) pour ouvrir les moules de cuisson (3),
- une zone de prélèvement (9) avec un dispositif de prélèvement (10) pour prélever les corps moulés gaufrés cuits à partir de la masse de cuisson hors des moules de cuisson (3) ouverts,
- puis à nouveau à travers la zone d'application (4),
- une porte de service (11) ouvrable et fermable étant prévue dans le boîtier (1), par laquelle, dans une première position de service, une zone de service (12) disposée entre la zone de prélèvement (9) et la zone de fermeture (6) est accessible de l'extérieur,
- et un interrupteur d'arrêt d'urgence étant prévu, lors de l'actionnement duquel le convoyeur sans fin (2) et les moules de cuisson (3) s'arrêtent après une certaine distance d'arrêt,
**caractérisé**
- **en ce qu'**un écran de protection (14) est prévu s'étendant transversalement à la direction de déplacement (13) des moules de cuisson (3), qui sépare la zone de service (12) de la zone de fermeture (6) dans la première position de service,
- **en ce que** l'écran de protection (14) est disposé de manière mobile dans la direction de déplacement (13),
- et **en ce que** l'écran de protection (14) est relié à l'interrupteur d'arrêt d'urgence de telle sorte que l'interrupteur d'arrêt d'urgence est actionné lorsque l'écran de protection (14) est déplacé de la première position de service vers ou dans la zone de fermeture (6).

2. Dispositif de cuisson selon la revendication 1, **caractérisé en ce que** l'écran de protection (14) est disposé dans la première position de service de telle sorte que la distance (15) de l'écran de protection (14) par rapport à l'extrémité de la zone de fermeture (6), mesurée dans la zone des moules de cuisson (3) le long de la direction de déplacement (13), est supérieure à la distance d'arrêt, la distance d'arrêt étant notamment la distance au bout de laquelle les moules de cuisson (3) s'arrêtent lors de l'actionnement de l'interrupteur d'arrêt d'urgence, lorsqu'ils sont déplacés à la vitesse de production conforme aux prescriptions.

3. Dispositif de cuisson selon la revendication 1 ou 2, **caractérisé**
- **en ce que** l'écran de protection (14) est conçu de telle sorte que sa longueur (20) est modifiable,
- en particulier en ce que l'écran de protection (14) est conçu de manière rétractable et déployable de façon télescopique.

4. Dispositif de cuisson selon l'une des revendications 1 à 3, **caractérisé en ce que**
- dans l'espace intérieur du boîtier (1) un rail de guidage (16) est prévu qui s'étend de telle sorte que l'écran de protection (14) modifie la longueur (20) lors d'un déplacement dans la direction de déplacement (13) afin d'éviter une collision avec d'autres composants du dispositif de cuisson.

5. Dispositif de cuisson selon la revendication 4, **caractérisé en ce qu'**une extrémité de l'écran de protection (14) est montée de manière guidée sur le rail de guidage (16).

6. Dispositif de cuisson selon la revendication 5 ou 6, **caractérisé en ce qu'**une coulisse (17) est prévue dans la zone de fermeture (6) pour fermer les moules de cuisson (3), et **en ce que** le rail de guidage (16) est placé en amont du tracé de la coulisse (17) et s'étend en particulier sensiblement parallèlement à la coulisse (17).

7. Dispositif de cuisson selon l'une des revendications 1 à 6, **caractérisé en ce que** l'écran de protection (14) s'étend, dans la première position de service, respectivement entre les deux plaques de cuisson (18) d'un moule de cuisson (3) ouvert, en particulier conçu comme une pince de cuisson.

8. Dispositif de cuisson selon l'une des revendications 1 à 7, **caractérisé en ce qu'**un bouton de sécurité (19), qui est conçu en particulier sous la forme d'une pédale est prévu, et **en ce que** l'actionnement du bouton de sécurité (19) empêche un actionnement de l'interrupteur d'arrêt d'urgence, même lorsque l'écran de protection (14) est déplacé de la première position de service vers ou dans la zone de fermeture (6) et ainsi dans une deuxième position de service.

9. Dispositif de cuisson selon la revendication 8, **caractérisé en ce que** la porte de service (11) et l'écran de protection (14) sont disposés dans la deuxième position de service de telle sorte que la zone d'application de la pâte et le dispositif d'application de la pâte (5) sont accessibles de l'extérieur.

10. Dispositif de cuisson selon l'une des revendications 1 à 9, **caractérisé**
- **en ce que** l'écran de protection (14) est monté de manière pivotante sur le bord de l'ouverture libérée par l'ouverture de la porte de service (11),
- en particulier en ce que la porte de service (11) est conçue comme une porte coulissante et en ce que la porte de service (11) est montée à la manière d'une charnière dans la zone de l'extrémité libre de la porte de service (11).

11. Kit de rééquipement pour former un dispositif de cuisson, pour la fabrication de corps moulés gaufrés cuits, de préférence comestibles, en particulier pour la fabrication de galettes gaufrées cuites à partir d'une masse de cuisson contenant du sucre,
le dispositif de cuisson comprenant un boîtier (1) dans lequel sont disposés un convoyeur sans fin (2) et plusieurs moules de cuisson (3) ouvrables et fermables, qui passent successivement le long du convoyeur sans fin (2) :
- une zone d'application (4) avec un dispositif d'application de pâte (5) pour appliquer une masse de cuisson sur les moules de cuisson (3) ouverts,
- une zone de fermeture (6) pour fermer les moules de cuisson (3),
- un espace de cuisson (7) chauffé pour cuire la masse de cuisson introduite dans les moules de cuisson (3),
- une zone d'ouverture (8) pour ouvrir les moules de cuisson (3),
- une zone de prélèvement (9) avec un dispositif de prélèvement (10) pour prélever les corps moulés gaufrés cuits à partir de la masse de cuisson hors des moules de cuisson (3) ouverts,
- puis à nouveau à travers la zone d'application (4),
- une porte de service (11) ouvrable et fermable étant prévue dans le boîtier (1), par laquelle, dans une première position de service, une zone de service (12) disposée entre la zone de prélèvement (9) et la zone de fermeture (6) est accessible de l'extérieur,
- un interrupteur d'arrêt d'urgence étant prévu, lors de l'actionnement duquel le convoyeur sans fin (2) et les moules de cuisson (3) s'arrêtent après une certaine distance d'arrêt,
- et le kit de rééquipement comprenant un écran de protection (14), un rail de guidage (16) et éventuellement une porte de service (11),
**caractérisé**
- **en ce que** le kit de rééquipement est reliable ou est relié au dispositif de cuisson de cette manière,
- **en ce que** l'écran de protection (14) du kit de rééquipement est prévu pour s'étendre transversalement à la direction de déplacement (13) des moules de cuisson (3), lequel sépare la zone de service (12) de la zone de fermeture (6) dans la première position de service,
- **en ce que** l'écran de protection (14) du kit de rééquipement est disposé de manière mobile dans la direction de déplacement (13),
- **en ce que** l'écran de protection (14) du kit de rééquipement est relié à l'interrupteur d'arrêt d'urgence de telle sorte que l'interrupteur d'arrêt d'urgence est actionné lorsque l'écran de protection (14) est déplacé de la première position de service vers ou dans la zone de fermeture (6),
- **en ce que** l'écran de protection (14) du kit de rééquipement est conçu de telle sorte que sa longueur (20) est modifiable,
- et **en ce que** dans l'espace intérieur du boîtier (1) est prévu le rail de guidage (16) du kit de rééquipement, qui s'étend de telle sorte que l'écran de protection (14) du kit de rééquipement modifie la longueur (20) lors d'un déplacement dans la direction de déplacement (13) afin d'éviter une collision avec d'autres composants du dispositif de cuisson.

12. **Procédé** pour le fonctionnement d'un dispositif de cuisson selon l'une des revendications 1 à 10,
- les moules de cuisson (3) étant déplacés le long du convoyeur sans fin (2),
- le dispositif de cuisson se trouvant dans la première position de service, dans laquelle la porte de service (11) est ouverte pour rendre accessible la zone de service (12), et dans laquelle l'écran de protection (14) sépare la zone de service (12) de la zone de fermeture (6),
- dans lequel, lorsqu'un objet est accroché à une partie mobile dans la zone de service (12), l'objet déplace l'écran de protection (14) vers la zone de fermeture (6), actionnant ainsi l'interrupteur d'arrêt d'urgence,
- l'interrupteur d'arrêt d'urgence arrêtant le convoyeur sans fin (2) ou le moule de cuisson (3) sur une certaine distance d'arrêt avant que l'objet ne soit coincé dans le moule de cuisson fermé (3).

13. **Procédé** selon la revendication 12,
- le dispositif de cuisson se trouvant dans la deuxième position de service, dans laquelle la porte de service (11) est ouverte pour rendre accessible la zone de service (12), et dans laquelle l'écran de protection (14) est déplacé en direction de la zone de fermeture (6) jusqu'à ce que la zone d'application (4) et en particulier le dispositif d'application de pâte (5) soient accessibles de l'extérieur,
- avant ou lors du déplacement de l'écran de protection (14) vers ou dans la zone de fermeture (6), un bouton de sécurité (19) étant actionné pour empêcher que l'interrupteur d'arrêt d'urgence ne soit actionné.
